# EUROPÄISCHE PATENTSCHRIFT

(11) **EP 0 663 334 B1**
(45) Veröffentlichungstag und Bekanntmachung des Hinweises auf die Patenterteilung: **09.09.1998**
(21) Anmeldenummer: 94116536.7
(22) Anmeldetag: 20.10.1994
(51) Int. Cl.: B62M 9/10

(54) **Mehrfachzahnkranz für Fahrrad-Kettenschaltungen**
Multiple sprocket for bicycle-derailleurs
Pignon multiple pour des dérailleurs de bicyclette

(30) Priorität: 18.01.1994 DE 4401272
(43) Veröffentlichungstag der Anmeldung: 19.07.1995
(73) Patentinhaber: SRAM Deutschland GmbH, 97424 Schweinfurt (DE)
(72) Erfinder: Schmidt, Frank, Dipl.-Ing., D-97422 Schweinfurt (DE); Neuer, Andreas, Dr., D-97422 Schweinfurt (DE); Dumbser, Gerhard, Dipl.-Ing. (FH), D-97464 Niederwerrn (DE); Bodmer, Jörg, Dipl.-Ing. (FH), D-97464 Niederwerrn (DE)

(56) Entgegenhaltungen:
- DE-A- 2 842 362
- GB-A- 1 582 793

## Beschreibung

Die Erfindung betrifft einen Mehrfachzahnkranz für Fahrrad-Kettenschaltungen gemäß dem Oberbegriff des Anspruchs 1.

Ein Mehrfachzahnkranz ist beispielweise aus der DE 28 42 362 bekannt, wo in erster Linie die axiale Montage eines kompletten Antriebsteils, bestehend aus Mehrfachzahnkranz, Lager und Freilauf beschrieben ist. Der Mehrfachzahnkranz ist, wie insbesondere aus Fig. 3 der DE 28 42 362 hervorgeht, zu einer vormontierten Einheit zusammengesetzt, was durch eine oder mehrere axial verlaufende Schrauben erreicht wird, die mehrere Zahnkränze mit Verbindungsringen gegeneinander spannen. Ein solches Zahnkranzpaket wird auf eine Zahnkranzhülse aufgeschoben und axial in der Anschlagposition fixiert. Die axiale Verspannung von Zahnkränzen und Verbindungsringen ist nach der Fixierung des Mehrfachzahnkranzes auf der Zahnkranzhülse für die Funktion des Kettenantriebs am Fahrrad unerheblich. Von Vorteil ist lediglich die Handhabung des Mehrfachzahnkranzes vor oder nach seinem Einsatz am Fahrrad an seinem axial fixierten Platz auf der Zahnkranzhülse.

Die Erst- und Wiedermontage eines Mehrfachzahnkranzes gemäß der DE 28 42 362 läßt sich nur mit Werkzeugen bewerkstelligen, was sich besonders für sportliches Fahren als Nachteil erweist, wenn die Zusammensetzung eines Mehrfachzahnkranzes hinsichtlich der Zähnezahl seiner Zahnkränze kurzfristig geändert werden soll.

Ein Mehrfachzahnkranz gemäß der vorliegenden Erfindung kann hingegen bei Verwendung jeweils eines einzigen Verbindungsringtyps ohne Werkzeuge beliebig zusammengestellt werden, wobei es für Erstausrüster möglich ist, vormontierte Mehrfachzahnkränze bereitzustellen und den Handel mit den einzelnen Zahnkränzen und dem Verbindungsring zu versorgen.

Es gibt somit keine Schwierigkeiten beim Ersatz einzelner Zahnkränze, wobei eine solche Montage von jedermann durchgeführt werden kann. Die Position der Zahnkränze zueinander hinsichtlich ihrer gegenseitigen Zuordnung bezüglich ihrer Zahnausbildung bzw. Formgebung läßt sich ohne Probleme durch speziell angeordnete Klemmeinrichtungen erreichen, die in einer bestimmten Position zu einer unsymmetrisch angeordneten Längsverzahnung zum Aufstecken der Zahnkränze und der Verbindungsringe auf die Zahnkranzhülse steht.

Die Erfindung hat es sich also zur Aufgabe gemacht, einen auf eine Zahnkranzhülse aufsteckbaren Mehrfachzahnkranz zu schaffen, bei welchem die Zahnkränze miteinander über je einen distanzhaltenden Verbindungsring ohne Werkzeuge von Hand verbindbar sind, wobei keine zusätzlichen Verbindungsmittel, wie Schrauben, Nieten, Bolzen etc. verwendet werden.

Die Lösung der Aufgabe ist im kennzeichnenden Teil des Anspruchs 1 b.z.w. 9 beschrieben. Ausgestaltungen sind den Unteransprüchen zu entnehmen.

Die Erfindung wird nachstehend anhand eines in Zeichnungen und Skizzen veranschaulichten Ausführungsbeispiel zu einem Mehrfachzahnkranz beschrieben. Es zeigen:
- Fig. 1: einen Freilauf-Antriebsteil mit einem Mehrfachzahnkranz, einer Zahnkranzhülse, einem Freilauf und Lagern im Teilschnitt;
- Fig. 2: den Mehrfachzahnkranz mit Zahnkränzen und Verbindungsringen im Teilschnitt
- Fig. 3: den Verbindungsring mit Klemmfortsätzen und einem Führungszahn;
- Fig. 4: einen Zahnkranz mit Klemmstellen in perspektivischer Darstellung;
- Fig. 5: den Verbindungsring in Klemmposition zum Zahnkranz gem. Fig. 4 in perspektivischer Darstellung;
- Fig. 6: einen Zahnkranz in Klemmposition zu dem Verbindungsring gem. Fig. 5 und somit zum Zahnkranz gem. Fig. 4 in perspektivischer Darstellung;
- Fig. 7: den Klemmfortsatz am Verbindungsring in einer bevorzugten Ausführung im Schnitt;
- Fig. 8: einen Mehrfachzahnkranz mit gem. Fig. 2 vertauschten Klemmeinrichtungen an Zahnkränzen und an Verbindungsringen im Teilschnitt.

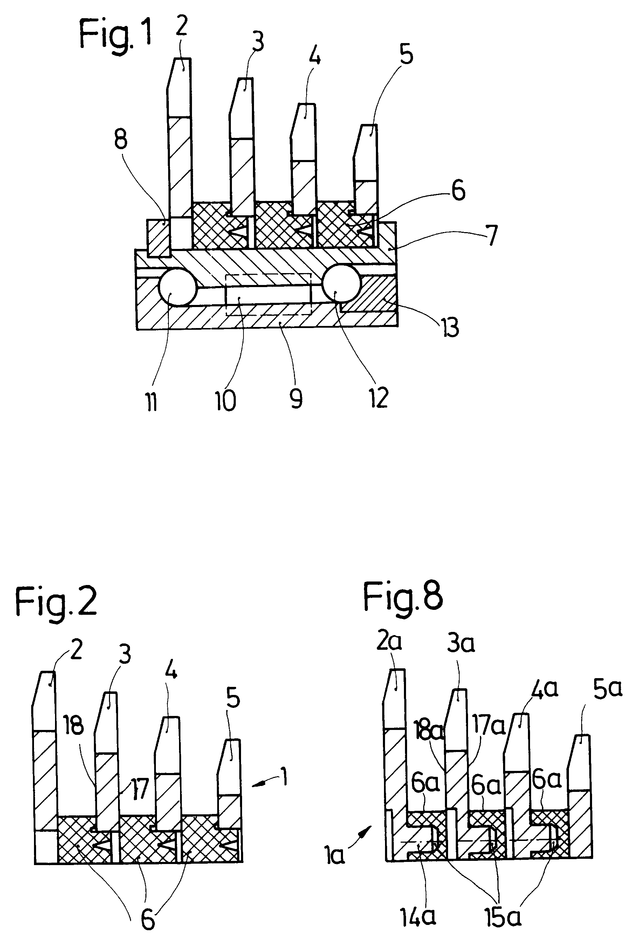

Wird mit 1 ein Mehrfachzahnkranz eines Freilaufantriebsteils an der Hinterradnabe eines Fahrrades bezeichnet, so besteht dieser aus mindestens zwei, im dargestellten Ausführungsbeispiel aus vier Zahnkränzen 2, 3, 4 und 5, wobei die Zähnezahl des Zahnkranzes 2 größer ist, als die des Zahnkranzes 3, die des Zahnkranzes 3 größer ist, als die des Zahnkranzes 4 und die des Zahnkranzes 4 größer ist, als die des Zahnkranzes 5. Zwischen den einzelnen Zahnkränzen ist je ein Verbindungsring 6 angeordnet, wobei sich der in Sandwichbauweise zusammengestellte Mehrfachzahnkranz 1 ergibt, der auf eine Zahnkranzhülse 7 axial aufgeschoben werden kann, weiche ein äußeres hier nicht dargestelltes Längsprofil trägt, das mit dem Innendurchmesser des Mehrfachzahnkranzes zusammenwirkt und eine drehfeste aber axial verschiebliche Verbindung ergibt. Gemäß Fig. 1 besteht der Freilaufnabenteil noch aus einem in einer Drehrichtung arretierenden und in der anderen Drehrichtung freilaufenden Freilauf 10, der zwischen der Zahnkranzhülse 7 und einer Antriebshülse 9 wirkt und die Antriebskraft der Kette in Antriebsrichtung auf die Nabe des Hinterrades weiterleitet. Zur Montage einer kompletten Baueinheit eines Freilaufantriebsteils sind ein erstes Lager 11 und eine zweites Lager 12 zwischen der Zahnkranzhülse 7 und der Antriebshülse 9 in Konusform angeordnet und durch eine Stellmutter 13 fixiert. Schließlich fixiert ein Sicherungsring 8 den Mehrfachzahnkranz 1 auf der Zahnkranzhülse 7.

Gemäß der Fig. 7 wird ein Klemmfortsatz 14 gezeigt, der ein beliebiges Profil haben kann, sich hier aber als zylindrisch ausgebildete, im Zentrum ausgenommene Hülse darstellt. Mindestens ein Klemmfortsatz 14 mit einer Höhe h ist je an beiden Planflächen 17 und 18 des Verbindungsringes 6 angeordnet und kann in Klemmstellen 15 eingeschoben werden, die in den Zahnkränzen 2 bis 5 den Klemmfortsätzen 14 gegenüberliegend angeordnet sind.

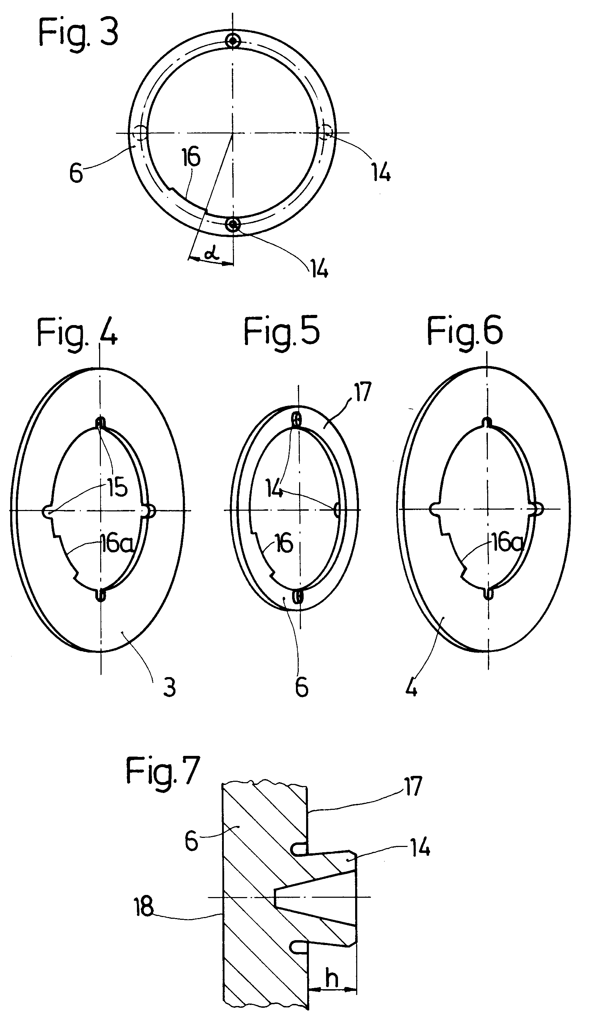

Gemäß Fig. 5 sind am Verbindungsring 6 auf der Planfläche 17 zwei Klemmfortsätze 14 auf der senkrecht verlaufenden Mittelachse angeordnet, während auf der Planfläche 18 zwei Klemmfortsätze 14 auf der waagerecht verlaufenden Mittelachse liegen. Die Zahnkränze 3 und 4 gem. Fig. 4 und Fig. 6 tragen auf beiden Mittelachsen Klemmstellen 15, so daß sie jeweils von beiden Seiten für die Befestigung eines Verbindungsringes 6 geeignet sind. Befestigung deshalb, weil der Klemmfortsatz 14 mit der Klemmstelle 15 einen lösbaren Preßverband bildet, der von Hand auch wieder zu lösen ist. Die auf die vorbeschriebene Weise verbindbaren Elemente sind nur in einer einzigen zueinander definierten Lage durch einen Führungszahn 16 am Innendurchmesser des Verbindungsringes 6 und je einem Führungszahn 16a am Innendurchmesser der Zahnkränze 2 - 5 miteinander montierbar, wobei die Führungszähne 16, 16a deckungsgleich aufeinander zu liegen kommen müssen. Eine solche Verbindung kann man von Hand oder maschinell herstellen, wobei Fehler spätestens bei der Montage des Mehrfachzahnkranzes 1 auf der Zahnkranzhülse 7 erkannt werden und am Fahrrad nicht auftreten können. Gemäß Fig. 3 weist der Führungszahn 16 zu dem Klemmfortsatz 14, 14a, der auf der senkrecht verlaufenden Mittelachse angeordnet ist, einen bestimmten Winkel α auf, der analog auch für die Lage des jeweiligen Führungszahns 16 gegenüber den Klemmstellen 15, 15a am Innendurchmesser der Zahnkränze 2 bis 5 anzuwenden ist.

Gemäß Fig. 8 ist eine Umkehrung der Klemmverbindung für eine Mehrfachzahnkranz 1a mit Zahnkränzen 2a, 3a, 4a und 5a gezeigt, die voneinander durch Verbindungsringe 6a getrennt sind. Die Zahnkränze 3a und 4a weisen an beiden Planflächen 17a und 18a Klemmfortsätze 14a auf, die in Klemmstellen 15a der Verbindungsringe 14a einschiebbar sind. Die am jeweiligen axialen Ende des Mehrfachzahnkranzes 1a liegenden Zahnkränze 2a und 5a dürfen in diesem Falle jedoch nur auf einer ihrer jeweils endseitigen Planflächen keinen Klemmfortsatz 14a tragen, um die Baubreite des Mehrfachzahnkranzes 1a nicht zu beeinträchtigen.

Das gezeigte Ausführungsbeispiel weist gem. Fig. 3 auf der einen Planfläche 17 zwei 180° zueinander angeordnete Klemmfortsätze 14 auf, wobei die Anordnung der Klemmfortsätze 14 auf der Planfläche 18 des gleichen Verbindungsringes 6 um 90° versetzt zu den Klemmfortsätzen 14 auf der Planfläche 17 liegen. Wird nun eine Ausführung mit drei Klemmfortsätzen 14 auf der Planfläche 17 gewählt, so stehen diese zueinander im 120°-Abstand, während die Klemmfortsätze auf der Planfläche 18 zu den Klemmfortsätzen auf der Planfläche 17 um 60° versetzt angeordnet sind. Dies führt dazu, daß an den Zahnkränzen 2 - 5, wo die doppelte Anzahl Klemmstellen 15 angeordnet sein muß, diese Klemmstellen 15 zueinander in jeweils gleichem Winkelabstand liegen.

## Patentansprüche

1. Mehrfachzahnkranz für Fahrrad-Kettenschaltungen mit mindestens zwei Zahnkränzen (2,3,4,5) mit unterschiedlicher Zähnezahl, die auf einer Zahnkranzhülse (7) drehfest angeordnet sind, wobei zwischen den Zahnkränzen (2,3,4,5) distanzhaltende Verbindungsringe (6) angeordnet sind, mit Lagern (11,12,) und einer Antriebshülse (9) die in Antriebsdrehrichtung von der Zahnkranzhülse (7) über einen Freilauf (10) mitgenommen wird, dadurch gekennzeichnet, daß mindestens ein Verbindungsring (6) auf seinen beiden Planflächen (17,18) mindestens einen Klemmfortsatz (14) aufweist, der aus den beiden Planflächen (17,18) herausragt und dessen Kontur zu einer Kontur von Klemmstellen (15) in jeweils benachbarten Zahnkränzen (5,2,3,4) paßt, wodurch eine permanente Verbindung in axialer Richtung zwischen Verbindungsringen (6) und Zahnkränzen (2,3,4,5) herstellbar ist.

2. Mehrfachzahnkranz nach Anspruch 1, dadurch gekennzeichnet, daß beliebig viele Zahnkränze (5,2,3,4) mit beliebig vielen Verbindungsringen (6) zu einem Zahnkranzpaket zusammenfügbar sind.

3. Mehrfachzahnkranz nach den Ansprüchen 1 und 2, dadurch gekennzeichnet, daß die Zahnkränze (2,3,4,5) ebenso wie die Verbindungsringe (6) mindestens einen Führungszahn (16a,16b) aufweisen, dessen Position zu den Klemmfortsätzen (14) an dem Verbindungsring (6) und zu den Klemmstellen (15) an den Zahnkränzen (2,3,4,5) einen derartigen Winkel (α) aufweist, daß bei Übereinanderlegen der Führungszähne (16a,16b) unter Beibehaltung der Achsmitten der Zahnkränze (2,3,4,5) und der Verbindungsringe (6) die Klemmfortsätze (14) den Klemmstellen (15) gegenüberstehen.

4. Mehrfachzahnkranz nach den Ansprüchen 1 bis 3, dadurch gekennzeichnet, daß die Außenkontur des Klemmfortsatzes (14) wenigstens teilweise der Kontur der Klemmstelle (15) zuzüglich eines bestimmten Übermaßes zur Erzielung eines Preßsitzes entspricht.

5. Mehrfachzahnkranz nach den Ansprüchen 1 bis 4, dadurch gekennzeichnet, daß die Klemmstellen (15) Bohrungen mit kreisrundem Umfang sind.

6. Mehrfachzahnkranz nach den Ansprüchen 1 bis 5, dadurch gekennzeichnet, daß die Klemmstellen (15) zum Zentrum des jeweiligen Zahnkranzes (2,3,4,5) hin halbkreisförmige Ausnehmungen sind.

7. Mehrfachzahnkranz nach den Ansprüchen 1 bis 6, dadurch gekennzeichnet, daß die Höhe (h) des Klemmfortsatzes (14) gleich oder kleiner der Breite der Zahnkränze (2,3,4,5) ist.

8. Mehrfachzahnkranz nach den Ansprüchen 1 bis 7, dadurch gekennzeichnet, daß die Lösekraft der Reibschlußverbindung zwischen den Zahnkränzen (2,3,4,5) und den Verbindungsringen (6) mindestens 3 Newton beträgt.

9. Mehrfachzahnkranz für Fahrrad-Kettenschaltungen zum Antrieb einer Nabenhülse im Hinterrad mit mindestens zwei Zahnkränzen (2a,3a,4a5a,) mit unterschiedlicher Zähnezahl, die auf einer Zahnkranzhülse (7) drehfest angeordnet sind, wobei zwischen den Zahnkränzen (2a,3a,4a,5a) distanzhaltende Verbindungsringe (6a) angeordnet sind, mit Lagern (11,12) und einer Antriebshülse (9) die in Antriebsdrehrichtung von der Zahnkranzhülse (7) über einen Freilauf (10) mitgenommen wird, dadurch gekennzeichnet, daß mindestens ein Zahnkranz (2a,3a,4a,5a) auf seinen beiden Planflächen (17a,18a) mindestens einen Klemmfortsatz (14a) aufweist, dessen Kontur aus den beiden Planflächen (17a,18a) herausragt und in Klemmstellen (15) in den jeweils benachbarten Verbindungsringen (6a) eintauchen kann, wodurch eine permanente Verbindung in axialer Richtung zwischen Verbindungsringen (6a) und Zahnkränzen (2a,3a,4a,5a) herstellbar ist.

## Claims

1. Multi-sprocket cluster for bicycle derailleur gears with at least two sprockets (2, 3, 4, 5) having different numbers of teeth and arranged on a sprocket hub (7) in a manner preventing relative rotation, spacer-forming connecting rings (6) being arranged between the sprockets (2, 3, 4, 5), with bearings (11, 12) and a driving sleeve (9) which is carried along in the driving direction of the sprocket hub (7) through a free wheel (10), characterised in that at least one connecting ring (6) has on both of its flat faces (17, 18) at least one locating projection (14) projecting out of the two faces (17, 18) and of which the outline fits in the outline of locating points (15) in respective adjacent sprockets (5, 2, 3, 4), whereby a permanent connection is produced in an axial direction between connecting rings (6) and sprockets (2, 3, 4, 5).

2. Multi-sprocket cluster according to claim 1, characterised in that any desired number of sprockets (5, 2, 3, 4) with a desired number of connecting rings (6) can be assembled together to form a sprocket assembly.

3. Multi-sprocket cluster according to claims 1 and 2, characterised in that the sprockets (2, 3, 4, 5) and likewise the connecting rings (6) have at least one guide tooth (16a, 16b), of which the position makes such an angle (α) with the locating projections (14) on the connecting ring (6) and with the locating points (15) on the sprockets (2, 3, 4, 5) that when the guide teeth (16a, 16b) are superimposed whilst maintaining the central axes of the sprockets (2, 3, 4, 5) and the connecting rings (6) the locating projections (14) and the locating points (15) are aligned.

4. Multi-sprocket cluster according to claims 1 to 3, characterised in that the external profile of the locating projection (14) corresponds at least partially to the profile of the locating point (15) apart from a predetermined oversize for producing a press-in engagement.

5. Multi-sprocket cluster according to claims 1 to 4, characterised in that the locating points (15) are bores of round outline.

6. Multi-sprocket cluster according to claims 1 to 5, characterised in that the locating points (15) are semi-circular notches facing towards the centre of the respective sprocket (2, 3, 4, 5).

7. Multi-sprocket cluster according to claims 1 to 6, characterised in that the height (h) of the locating projection (14) is equal to or smaller than the thickness of the sprockets (2, 3, 4, 5).

8. Multi-sprocket cluster according to claims 1 to 7, characterised in that the releasing force of the frictional connection between the sprockets (2, 3, 4, 5) and the connecting rings (6) amounts to at least three Newtons.

9. Multi-sprocket cluster for cycle derailleur gears for driving a hub in the rear wheel with at least two sprockets (2a, 3a, 4a5a,) having different numbers of teeth and arranged on a sprocket hub (7) to rotate with it, spacer-forming connecting rings (6a) being arranged between the sprockets (2a, 3a, 4a, 5a), with bearings (11, 12) and a driving sleeve (9) which is carried along in the driving direction by the sprocket hub (7) through a free wheel (10), characterised in that at least one sprocket (2a, 3a, 4a, 5a) has on its two flat faces (17a, 18a) at least one locating projection (14a) of which the outline projects out of the two flat faces (17a, 18a) and can enter locating points (15) in the respective adjacent connecting rings (6a), whereby a permanent connection is produced in an axial direction between connecting rings (6a) and sprockets (2a, 3a, 4a, 5a).

## Revendications

1. Pignon multiple pour dérailleurs de bicyclette comprenant au moins deux pignons dentés (2, 3, 4, 5) ayant des nombres de dents différents et montés avec solidarité en rotation, sur une douille de pignons (7) avec interposition entre les pignons de la bague de liaison (6) maintenant l'espacement des paliers (11, 12) et une douille d'entraînement (9) qui est entraînée dans la direction d'entraînement par la douille de pignons (7) par l'intermédiaire d'une roue libre (10),
caractérisé en ce qu'
au moins une bague de liaison (6) présente sur ses deux faces planes (17, 18) au moins un téton de calage (14) en saillie sur la face correspondante (17, 18) et dont le contour est ajusté au contour de zones de calage (15) situées dans le pignon denté voisin (5, 2, 3, 4) de manière à établir une liaison permanente en direction axiale entre les bagues de liaison (6) et les pignons dentés (2, 3, 4, 5).

2. Pignon multiple selon la revendication 1,
caractérisé en ce qu'
on peut assembler à volonté plusieurs pignons dentés (5, 2, 3, 4) et plusieurs bagues de liaison (6) de manière à former un bloc de pignons dentés.

3. Pignon multiple selon les revendications 1 et 2,
caractérisé en ce que
les pignons dentés (2, 3, 4, 5) ainsi que les bagues de liaison (6) comportent au moins une dent de guidage (16a, 16b) dont la position par rapport aux tétons de calage (14) portés par la bague de liaison (6) et par rapport aux zones de calage (15) situées sur les pignons (2, 3, 4, 5) correspond à un angle α tel qu'en superposant les dents de guidage (16a, 16b) tout en maintenant les milieux des axes de pignons (2, 3, 4, 5) et des bagues de liaison (6), les tétons de calage (14) se trouvent en face des zones de calage (15).

4. Pignon multiple salon les revendications 1 à 3,
caractérisé en ce que
le contour externe du téton de calage (14) correspond au moins en partie au contour de la zone de calage augmenté d'une surépaisseur définie de manière à créer une assise avec pression.

5. Pignon multiple selon les revendications 1 à 4,
caractérisé en ce que
les zones de calage (15) sont des perçages a parois circulaires .

6. Pignon multiple selon les revendications 1 à 5,
caractérisé en ce que
les zones de calage (15) sont des évidements ayant la forme d'un demi-cercle ouvert en direction du centre du pignon correspondant (2, 3, 4, 5)

7. Pignon multiple selon l'une des revendications 1 à 6,
caractérisé en ce que
la hauteur (h) du téton de calage (14) est égale ou inférieure à la largeur du pignon denté (2, 3, 4, 5).

8. Pignon multiple selon l'une des revendications 1 à 7,
caractérisé en ce que
la force nécessaire pour rompre le verrouillage par frottement existant entre les pignons (2, 3, 4, 5) et les bagues de liaison (6) est d'au moins 3 newton.

9. Pignon multiple pour dérailleurs de bicyclettes, comprenant au moins deux pignons dentés (2, 3, 4, 5) ayant des nombres de dents différents et montés avec solidarité en rotation, sur une douille de pignons (7) avec interposition entre les pignons de bague de liaison (6) maintenant l'espacement, des paliers (11, 12) et une douille d'entraînement (9) qui est entraînée dans la direction d'entraînement par la douille de pignons (7) par l'intermédiaire d'une roue libre,
caractérisé en ce qu'
au moins un pignon denté (2a, 3a, 4a, 5a) précente sur chacune de ses faces planes (17a, 17b) au moins un téton de calage (14a) dont le contour est en saillie sur la face plane correspondante et peut se loger dans des zones de calage (15) prévues dans l'anneau de liaison voisin (6a) de manière à établir une liaison permanente en direction axiale, entre la bague de liaison (6a) et les pignons dentés (2a, 3a, 4a, 5a).
